# EUROPEAN PATENT APPLICATION

(11) **EP 2 034 458 A2**
(43) Date of publication of application: **11.03.2009**
(21) Application number: 08102454.9
(22) Date of filing: 10.03.2008
(51) Int. Cl.: G07F 7/10, G06Q 20/00, G07F 7/08

(54) **One-time passwords**

(30) Priority: 09.03.2007 US 894110 P
(71) Applicant: ActivIdentity, Inc., Fremont, CA 94555 (US)
(72) Inventor: Fedronic, Dominique, BELMONT 94002 (US); Le Saint, Eric F., SUNNYVALE, CA 95014 (US); Boyer, John, OTTAWA Ontario K1S 1X9 (CA); Boggess, William, PACIFIC GROVE CA 93950 (US)
(74) Representative: Colas, Jean-Pierre

(57) **Abstract**

A strong authentication method and system using a Secure ICC component coupled with a Personal device, and relying on the existing cryptographic protocols and keys for managing the secure ICC to generate One-Time-Passwords when the necessary authentication keys or cryptographic protocols are not already present in the Secure ICC configuration for that purpose.

## Description

Personal devices are relying on secure Integrated Circuit Card (ICC) components to perform security operations. Example of such Personal devices are secure authentication tokens such as USB tokens hosting a secure chip, electronic badge holders or personal smart card readers capable of using smart card functions such as Activldentity Solo, Personal Digital Assistants (PDAs) or Laptops equipped with a smart card reader or including a Trusted Platform Module (TPMs), cell phones embedding a UICC or secure element. The personal devices leverage the secure ICCs components to provide multiple cryptographic-based services such as authentication, signature and encryption.

The secure ICC components are generally equipped with management keys, most often unique. The management keys are used in association with management protocols enabling the secure execution or secure transport of secure ICC management services, such as content or state life cycle management: executable code loading, secure ICC personalization or key management, secure ICC unlock, secure ICC activation. The secure ICCs also contain Application keys associated with application usage protocols, such as challenge-response based external authentication protocols which are not intended for secure ICC management.

The commonly available secure ICC management protocols are generally mutual authentication protocols with key agreement and often use shared permanent symmetric keys such as DES, TDES or AES to generate transient session keys to protect all data that is transported to the card while the session keys are maintained. The session key generation is derived from exchanged challenges and response cryptograms produced with the permanent symmetric keys. Protocols with asymmetric keys are also available. Examples are GlobalPlatform smart cards following GlobalPlatform Card Specification Version 2.2, march 2006, with Secure Channel Protocol '01', '02', '80'. On certain GlobalPlatform card configurations, the secure channel session keys which are used for transport may be the only available symmetric keys on the card that can be used to produce a one-time password.

PIV Cards specified within the FIPS 201 supporting standards such as NIST SP 800-73 are configured with a symmetric administrative key '9B' which is used to authenticate the card management officer or card management system to the card and gain access to management services, such as card unlock. For some certified PIV Card configurations, this key may be the only available symmetric key on the card that can be used to produce a one-time password that is sufficiently short for conveniently being displayed with a personal device without connectivity with the access terminal, and communicated by the personal device user.

In order to prevent brute force attacks on authentication keys, some implementations of mutual authentication protocols for key agreement use a failed authentication counter and a threshold. A successful external authentication resets the counter. When the counter reaches the threshold, then the usage of the authentication keys and secure messaging is disabled. For example with certain GlobalPlatform secure channel 01 implementations, it is necessary to complete all steps of the secure ICC management protocol and therefore transmit all necessary cryptograms to the secure ICC, such as for instance the host authentication cryptogram that proves the ownership of the external management key to the card.

Authentication technology based on One-Time-Passwords (OTP) is replacing traditional password based authentication for protecting access to network services. OTPs are particularly suited for secure remote access solutions requiring user authentication through a VPN or dial-up connection, and where OTPs can be used as substitutes to regular passwords for remote access.. OTPs are generated by encrypting of one or more varying input variables such as counter or clock values, with a symmetric or asymmetric authentication key. Symmetric keys are convenient as they can produce short OTPs which are the truncation of the cryptograms resulting from the encryption. This allows for convenient display and transfer of the OTP from the personal device to the access terminal by the personal device user. OTPs are changing after each use and eliminate replay or dictionary attacks, and reduce maintenance and support costs as one-time passwords do not need to be remembered. The OATH initiative provides HOTP specifications to generate verifiable OTP. US Patents 5,802,176 and 5,887,065 describe OTP generation and verification mechanisms for strong authentication.

The authentication protocol used for remote access with an OTP can be RADIUS, Diameter or equivalent. See [Internet RFC 2138, Internet RFC 3588]. These protocols are specified to be fully conversational and allow authentication protocol message exchanges with multiple commands and responses. However, some RADIUS protocol implementations are limited to the simple transmission of a user identifier and its password or OTP and the return of authentication acknowledgement.

Personal devices used to generate OTPs for user authentication are preferably coupled with a secure ICC component such as a Smart Card, UICC or a TPM . On behalf of the personal device, the secure ICC component protects both the cryptographic module and a unique authentication key that are used to generate the OTP. For each new authentication through an access terminal, such as a VPN Client or dialup interface, web service interface or door reader, a new OTP is obtained from the personal device. The OTP along with the user or device id, and other credentials such as an additional user secret or PIN are submitted to an authentication service for verification. The authentication service locates the corresponding public or symmetric authentication key using the User ID, and verifies that the same OTP has been indeed generated with the matching private or symmetric authentication key.

If the personal device is connected to the access terminal, the OTP value can be generated and transmitted transparently from the user to a remote access system. If the personal device cannot be connected, the user may need to manually activate the OTP generation from the personal device and enter the displayed value to the access terminal.

To achieve strong authentication based on more than one factor, or to provide all parameters necessary to compute the OTP or execute the authentication protocol at the terminal end, additional PIN, password or Biometric data, user identifier, terminal identifier, personal device identifier or IP address, can be added from either the access terminal or the personal device, or an other external component. If the personal device cannot be connected to the access terminal, or if some OTP input parameters cannot be communicated to the personal device, then the personal device may only be able to produces an intermediate cryptogram that is used for the computation of the final OTP.

To enhance the security, the OTP verification may be associated with additional authentication methods on the server side. For instance PIN and biometrics values may be transmitted to the authentication server for verification.

OTP-based authentication with a personal device should be possible in any context requiring network access, including situations where the device can be connected to or behave as an access terminal or where it cannot be connected. Also the authentication solution must be capable of supporting a non-conversational (single pass) implementation of the RADIUS protocol. For an implementation based on the secure channel protocol of a smart card it means that the host challenge cannot be communicated from the host to the personal device.

Once the personal devices with secure ICC components have been deployed for use in very large quantities, it is an operational and cost challenge to plan for the addition of new services and new keys to the secure ICC component. For instance the secure ICC may be lacking space, or the ICC configuration may be non-modifiable, or it may be too expensive to update the secure ICC post-issuance infrastructure or it may be unpractical to organize the manual updates of the large amount of secure ICCs under a controlled schedule. For instance it can be desirable to add new strong user authentication services to already deployed devices such as a remote network access, physical access, or a secure logon where passwords or other static access credentials are replaced with OTPs.

This addition of new services becomes cost-effective and may only be possible when the existing secure ICC configuration, its administrative keys and cryptographic authentication protocols are leveraged without any modification. For instance, with specific ICC configurations, such as acceptable PIV or DoD CAC card configurations, the management keys are the only symmetric keys available in the secure ICC that can provide strong authentication to an external entity, and the protocols available to use those keys for producing OTPs are limited, for instance GlobalPlatform secure Channel '01'. Of course, the deployment of a new strong authentication service may still require an update or addition of the authentication service, and possibly updates of the VPN access terminal or of the personal devices, but the updates of the secure ICCs can be avoided.

Specifically, in a solution using a global platform cards such as the DoD Common Access card, the opportunity is to avoid the loading a new OTP authentication application and related key material inside millions of cards.

In an embodiment of the invention, we describe how a One-Time-Password can be produced from a Smart card connected to the access point terminal using the secure channel keys used for content management, and how the OTP can be verified by a remote authentication service. In another embodiment we describe how a PIV card including an administrative key to authenticate an administrator can also be used to produce a verifiable OTP when the personal device coupled with the PIV card is not connected to the network or service access terminal.

### SUMMARY OF THE INVENTION

One aspect of the invention is an end-to end strong authentication method and system which consists of producing data cryptograms used to compute OTPs from a personal device using the management keys of a secure ICC on one end, transmitting the data cryptogram to an access terminal where the OTP generation and the authentication request are completed, and transmitting the final OTP to an authentication service capable of verifying that OTP at the other end. The resulting effect is to authenticate the personal device or its owner for accessing a network or service. The keys used for generating or verifying the OTP or the data cryptogram used to produce the final OTP are originally intended for managing the contents and state of the secure ICC and not meant to produce an OTP. The secure ICC protocol used to produce the data cryptogram is either at lest a section of a management protocol associated with that key, or a protocol that is not used for secure ICC management but applied to the management key. Also the secure ICC configuration, its protocols and other functional means are not modified but reused. Upon generation from the secure ICC, the personal device may display the OTP or data cryptogram to the personal device owner to be read and input to a network or service access terminal. An alternative is to transmit directly the OTP to the access terminal without displaying it when the personal device is connected or an integral part of the Access terminal. The same proposed method and system may be applied to implement a range of authentication solutions, such as for example, a VPN access solution, a physical access solution, a secure logon solution, or similar solutions where passwords or other static access credentials may be replaced with OTPs generated from secure ICC components for enhanced security. The solutions can operate in two distinct system implementation modes. Either the personal device is disconnected from the access terminal (non-connected mode) or it is connected, coupled or is an integral part of the access terminal (connected mode).

In a first embodiment of the invention, in non-connected mode, a WEB kiosk is used as an access terminal and provides access to services but does not include a connection with the personal device, which may be a programmable PIV Card reader with a display such as Activldentity Solo. The personal device includes an ICC interface component. which generates a cryptogram using the PIV card '9B' administration key applied on varying clock and counter values. The OTP is extracted and displayed on the Activldentity Solo display, and can be read and input by the end user through the kiosk interface, and then transmitted to the authentication server for kiosk service access along with additional user or device credentials or identifiers. The authentication server can reproduce or synchronize those OTP values at the authentication verification step. The use of a time-based challenge as input into a secure transport protocol instead of a regular time based challenge is one characteristic of the invention.

In a second embodiment of the invention, in connected mode, the personal device is either an integral part of the network or service access terminal such as a laptop equipped with a smart card reader, or is simply connected to the terminal such as a cell phone equipped with a UICC and connected to an access through a wireless interface component such as NFC. In the latter case there is no need to display the OTP value which can be automatically transmitted to the access point and the corresponding authentication service. In connected mode, either the personal device, the access terminal, or the authentication server may provide the OTP input parameters, such as a time or counter challenge and either the personal device, the access point or the authentication server may drive the OTP computation. An example of the second embodiment is a US DoD Common Access Card (CAC) equipped with GlobalPlatform secure channel keys for management, and inserted in a laptop, which acts as both personal device and access terminal. In this example, a VPN access service requires the generation of a verifiable OTP based on symmetric key cryptography. The CAC secure channel keys are used to execute the first steps of the GlobalPlatform secure Channel protocol '01', but varying clock and counter values produced by the laptop are used instead of host random values. The card cryptogram resulting from the first steps is truncated to form an OTP, that is transmitted to the VPN access service in addition to a user password and identifiers to ensure 2-factor authentication.

After successful OTP validation, network or service access may be authorized, but the cryptographic module may be left in an incorrect state if not all steps of the management or transport protocol are executed. If the cryptographic protocol requires the completion of the mutual authentication, such as with GlobalPlatform secure channel '01' or '02' or '03', the access terminal or the personal device will request a Web service or network service to complete the missing host authentication step of the cryptographic protocol. The service will provide the necessary host cryptograms to transmit within appropriate cryptographic module commands, which will result in keeping the cryptographic module in a correct state. In non-connected mode, the personal device must be equipped with a keypad or equivalent input means to capture the necessary host cryptograms.

### BRIEF DESCRIPTION OF THE DRAWINGS

Figure 1 is a block diagram of the invention in a non connected mode;
Figure 2 is a block diagram of the invention in a connected mode;
Figure 3 is a more detailed view of the personal device;
Figure 4 is a time diagram of the operation of the invention;
Figure 5 illustrates an embodiment of the invention.

### DETAILED DESCRIPTION

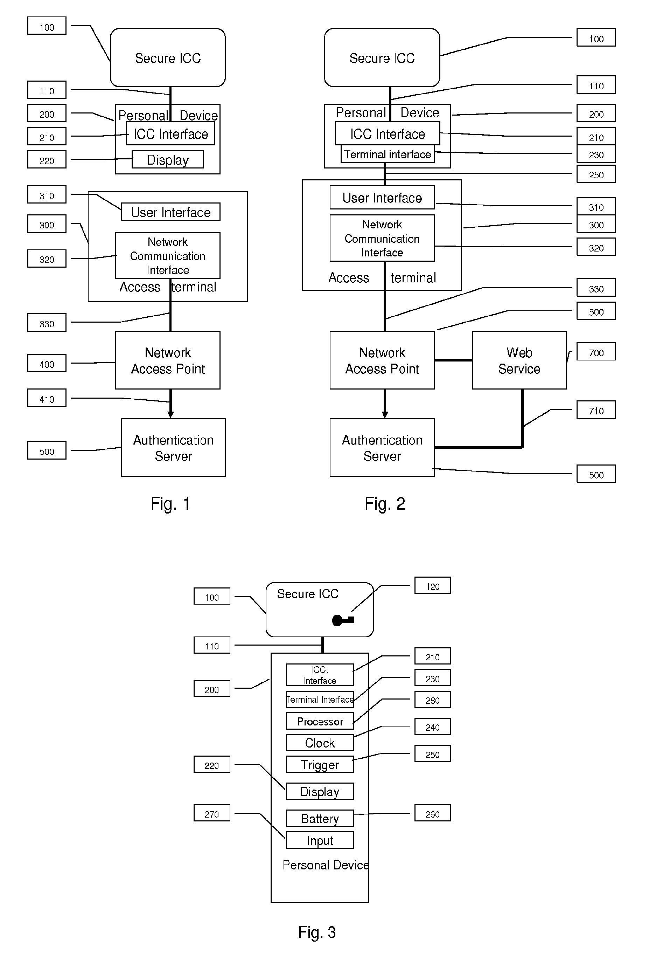

The invention implements an OTP based authentication protocol for network, service or physical access or other strong authentication solution such as secure logon or physical access, using the existing management keys and cryptographic protocol of a secure ICC component (100) connected to the ICC interface module (210) of a personal device (200) through a connection (110). Two embodiments are described: in (Fig 1.), the personal device is not connected to an access terminal (300), and in (Fig 2.) the personal device is connected to the access terminal with a terminal interface module (230) and a connection (250). In this mode the personal device may be configured as an integral part of the terminal, as for instance the personal device may be a laptop and the secure ICC a smart card or TPM.

In the non-connected mode (Fig 1.), a personal device (200) is used to control the generation of the OTP from the secure ICC with a secure ICC interface module (210) and then allow the personal device owner to read the OTP from a display (220) after the OTP generation. The personal device can be operated without connection to a access terminal.

The personal device (200) may include a processor and memory (280), clock (240), optional LCD display (220) and battery (260) for implementations in non-connected mode so it can be operated without connection with a power source. A secure ICC interface component (220) ensures the connection (110) with the secure ICC (100). An optional trigger (250) such as a push button is used to activate the OTP generation and display. This activation can also be automated upon insertion or connection of the secure ICC with the personal device. An optional input interface component (270) may allow a PIN, biometric information, or other input data to be entered as part of the OTP generation and authentication protocol.

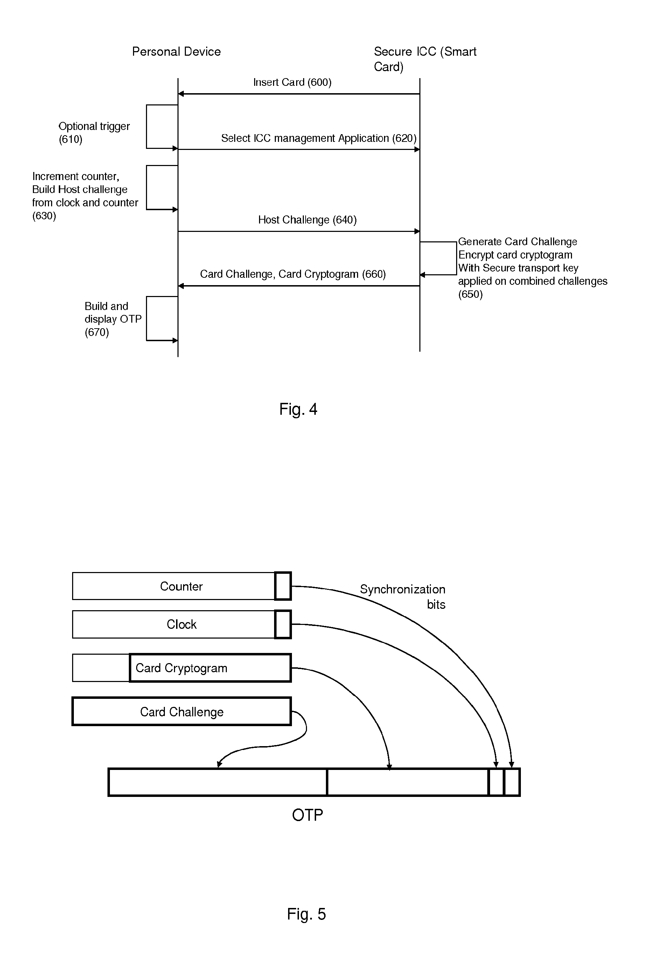

Upon activation (600) or (610), the personal device sets the execution context of the secure ICC to perform a card management operation (620), with for instance a smart card 'select' command. Then the secure ICC will execute the cryptographic protocol using the management keys, for instance the mutual authentication part of the secure transport protocol. For that purpose, the personal device processor (280) first computes a challenge (630), that is built for instance by combining the part of a clock value from (240) with a counter value stored either in permanent memory or in transient memory accessible from the processor (280). Note that the counter is incremented before being used. Also note that as an option, the less significant bits of both counter and clock present in the OTP may be used as synchronization bits. (Fig. 5). With this challenge, the personal device can request the establishment of a secure transport session with the secure ICC (640). In turn, the secure ICC executes mutual authentication steps of the secure transport protocol (650) and produces a card challenge, and a card cryptogram that is generally the result of the encryption with the authentication key (120) of both host and card challenges. Both card cryptogram and challenge are returned to the personal device (660). The personal device can then construct the OTP (670) by concatenating or combining the part or the whole value of the card challenge, a part or the whole card cryptogram and optionally the synchronization bits. All binary values are converted in a human readable form such as decimal, hexadecimal, base32 or base64 and then displayed with (220).

The personal device owner can then read the displayed value and input it on the user interface (320) of the Access terminal (300) where it is combined with a secure ICC identifier or a user identifier, and possibly a PIN or additional credentials. The OTP and combined data are transmitted through the network communication interface (310) to the network access point (400) for further verification with the authentication server (500) using a RADIUS protocol or equivalent through the connection (410).

In order to verify the OTP, the authentication server uses the user identifier, or secure ICC identifier or personal device identifier to retrieve the counter, clock offset and keying material from its database. The keying material is necessary to obtain either the symmetric secure transport key used by the secure ICC (120) or the asymmetric public key if (120) is a private key. The Keying material is for instance a reference to the secure transport protocol master key and the diversification data necessary to reproduce (120). With the synchronization bits inside the OTP, the authentication server can adjust the clock and counter values and take in account the potential clock drift and offset and a handle a small number of missing OTPs that have never been sent. Actually, in most cases, the authentication server is able to produce exactly the same time dependent challenge as the personal device. This synchronization technology is described in US Patents 5,802,176 and 5,887,065. If the key (120) is symmetric, the authentication server (500) has enough information to reconstruct the host challenge (640), and with the card challenge and the key (120) it can therefore reproduce the card cryptogram and verify that part of this cryptogram matches the part contained within the OTP. If the key (120) is asymmetric, the server decrypts the card cryptogram with the public key and verifies that the result matches the challenge. In case of success the authentication server informs the Network Access Point (410) that the network connection from the Access terminal (300) can be established.

With both challenges and the key (120), the authentication server may also generate the host cryptogram that must be transported to the secure ICC to complete the mutual authentication steps of the secure transport protocol.

However, if the RADIUS protocol implementation does not allow data to be sent back directly to the network access point (410) and therefore to the access terminal (300), then the host cryptogram can still be recovered by the remote access application from the access terminal with a separate protocol as follows: Once the remote network access is authorized and established, the access terminal connects to the authentication server through a web service or portal (600), and if the OTP was verified successfully the host cryptogram is returned. Optionally the host cryptogram request may have a time limit constraint. Also, the authentication server should only allow requests for the host cryptogram if specific context information is provided by the requester, such as the OTP and user identifier value. In the non-connected mode (Fig1), the host cryptogram must be displayed on the access terminal user interface (320). The personal device must also provide an additional input device (270) to allow for entering the host cryptogram.

In the connected mode (Fig. 2), a personal device (330) such as a NFC cell phone with UICC components is connected to the access terminal (300). The system and method to enable the remote network access with the mobile device is very similar to the non-connected mode. However, a personal device is not necessary to support the OTP generation and secure transport protocol control functions, since all those aspects, such as the production of a clock and counter values, as well as the generation of secure transport protocol commands can be implemented on the access terminal. Also to simplify the user experience, it is possible to not display the OTP, so the user only needs to connect the secure ICC, and optionally input other credentials such as PIN or Biometrics from the access terminal. A user or device identifier may also be needed as input if not already accessible from the terminal.

The transmission and verification of the OTP is similar to the non-connected mode. The recovery of the host cryptogram also follows the same method. However, in connected mode, the transmission of the host cryptogram to the mobile device does not require user intervention. Upon request from the access terminal, the host cryptogram is obtained from the authentication server and is directly and transparently transmitted to the secure ICC through the personal device.

## Claims

1. An authentication method between a personal device coupled with a secure ICC and a remote authentication service comprising: a) the generation of a data cryptogram from that said personal device using at least one management key of said secure ICC, b) the construction of a one-time password from at least said data cryptogram and c) the remote verification of the said one time password from the said remote authentication service.

2. The method according to claim 1, where the data cryptogram is produced using at least a section of one management protocol associated with said management key on said secure ICC.

3. The method according to claim 1, where the data cryptogram is produced using at least a protocol located on the secure ICC that is not secure ICC management protocol.

4. The method according to claim 1 where the said data cryptogram is the said one-time-password.

5. The method according to claim 1, where the personal device includes an interface to transmit the said data cryptogram to the personal device user, and where the said user can transmit the said data cryptogram to an access terminal in relation with the remote authentication service.

6. The method according to claim 1, where the personal device includes an interface to transmit the said data cryptogram to an access terminal in relation with the remote authentication service.

7. The method according to claim 2 where the remote authentication service can compute and return data necessary to complete the said management protocol of the secure ICC.

8. The method according to claim 1 where the said management key is symmetric.

9. The method according to claim 1 the said management key is asymmetric

10. An authentication system comprising a personal device coupled with a secure ICC and a remote authentication server, whereby a) the personal device includes data cryptogram generation means relying on at least one management key of the secure ICC, b) the data cryptogram is used to construct a one time password, and c) the remote authentication server includes verification means for said one time password.

11. The system according to claim 10, where the said data cryptogram generation means include at least a section of one management protocol associated with said management key on said secure ICC.

12. The system according to claim 10, where the said data cryptogram generation means include at least a protocol on said secure ICC that is not a secure ICC management protocol.

13. The system according to claim 10 where the said data cryptogram is the said one-time-password.

14. The system according to claim 10, where the personal device includes an interface to transmit the said data cryptogram to the personal device user, and where the said user can transmit the said data cryptogram to an access terminal with network interface means enabling a relation with the remote authentication server.

15. The system according to claim 10, where the personal device includes an interface to transmit the said data cryptogram to an access terminal with network interface means enabling a relation with the remote authentication server.

16. The system according to claim 11, where the remote authentication server includes means to compute and return data necessary to complete the said management protocol of the secure ICC.

17. The system according to claim 10, where the management keys are symmetric.

18. The system according to claim 10, where the management keys are asymmetric
